# EUROPEAN PATENT APPLICATION

(11) **EP 4 714 917 A1**
(43) Date of publication of application: **25.03.2026**
(21) Application number: 24810051.3
(22) Date of filing: 02.04.2024
(51) Int. Cl.: C03C 11/00, C03B 19/06, A24F 40/70

(54) **POROUS GLASS MATERIAL WITH UNIFORM PORE CHANNELS, AND ATOMIZING CORE AND ELECTRONIC ATOMIZER**

(30) Priority: 19.05.2023 CN 202310574687
(71) Applicant: Smoore International Holdings Limited, Grand Cayman, KY1-1111 (KY)
(72) Inventor: YANG, Congming, Shenzhen, Guangdong 518102 (CN); LONG, Jicai, Shenzhen, Guangdong 518102 (CN); ZHOU, Qianyuan, Shenzhen, Guangdong 518102 (CN); FU, Lei, Shenzhen, Guangdong 518102 (CN); ZHANG, Jiao, Shenzhen, Guangdong 518102 (CN); ZHOU, Hongming, Shenzhen, Guangdong 518102 (CN)
(74) Representative: Winter, Brandl - Partnerschaft mbB
(86) International application number: PCT/CN2024/085494
(87) International publication number: WO 2024/239803

(57) **Abstract**

This application relates to the field of porous material technologies, and specifically relates to a porous glass material having uniform pore channels, a vaporization core, and an electronic vaporizer. The porous glass material having uniform pore channels includes a framework and multi-directional interconnected pores. where multi-directional interconnected pores are connected to each other by pore throats. The pore throats have the average diameter of 25 to 45 micrometers, the sizes of the pore throats are distributed across the range of 5 to 60 micrometers, and the sizes of more than 50% of the pore throats are distributed across the range of 20 to 45 micrometers. In this application, with sizing of the pore throats, the dimensions of interconnected channels between pores are made uniform, avoiding uneven liquid guiding rate and localized overheating during use of the vaporization core. This avoids localized coking and carbon deposition, ensuring stable vapor generation with negligible performance degradation during vaping. Compared to a commercially available ceramic heating element, a porous glass substrate exhibits significantly reduced carbon deposition under the same conditions in vaping applications. In addition, the liquid guiding rate is significantly increased, with a maximum increase of 33% or greater compared with the commercially available porous ceramic heating element.

## Description

### CROSS-REFERENCE TO RELATED APPLICATIONS

This application claims priority to Chinese Patent Application No. 202310574687.9, filed with the China National Intellectual Property Administration on May 19, 2023 and entitled "POROUS GLASS MATERIAL HAVING UNIFORM PORE CHANNELS, VAPORIZATION CORE AND ELECTRONIC VAPORIZER", which is incorporated herein by reference in its entirety.

### TECHNICAL FIELD

This application relates to the field of porous material technologies, and specifically relates to a porous glass material having uniform pore channels, a vaporization core, and an electronic vaporizer.

### BACKGROUND

An electronic vaporizer is a product that converts a vaporization substrate into vapor through vaporization and the like for a user to inhale. A vaporization core is a key component of the electronic vaporizer, and plays a vital role in performance of the electronic vaporizer, such as taste and aerosol production volume.

Most of the closed-type electronic vaporizers employ a porous ceramic vaporization core, which are typically fabricated from raw materials such as diatomaceous earth, silica and alumina, incorporated by glass powder, pore-forming agent, and the like, and then sintered to form a particulate-stacked porous ceramic structure. Employing a porous ceramic vaporization core has features such as good uniformity, extended durability, delicate taste, and high mechanical reliability. However, a porous ceramic heating element exhibits a proportional distribution of semi-closed pores and micropores, which can lead to adsorption of low-viscosity components in the vaporization substrate. This adsorption subsequently compromises vaping taste and aroma fidelity. In addition, the microscopically rough and discontinuous surface of the porous ceramic heating element renders it incompatible with thin-film heating layers.

Compared to porous ceramics, porous glass features a smooth, continuous microstructure with a lower proportion of micropores, minimizing adsorption of the vaporization substrate, thereby improving taste and aroma fidelity for the electronic vaporizer to some extent. However, pore structures of porous glass in the prior art exhibit significant non-uniformity, with substantial variations in pore channel dimensions. This results in inconsistent transfer rates of the vaporization liquid substrate, where regions with slower vaporization liquid transfer rates are prone to e-liquid supply deficiencies. Such deficiencies lead to localized overheating, causing localized coking and carbon deposition. Over prolonged use, this severely degrades the user's vaping experience and accelerates device failure. Additionally, the liquid guiding rate requires further improvement.

### SUMMARY

Therefore, a technical problem to be resolved by this application is to overcome foregoing defects in existing porous glass materials, particularly the issues arising from substantial variations in pore channel dimensions and the need for improved liquid guiding rate, so as to provide a porous glass material having uniform pore channels, a vaporization core and an electronic vaporizer.

Therefore, this application provides the following technical solutions.

Provided in this application is a porous glass material having uniform pore channels, including a framework and multi-directional interconnected pores, where the multi-directional interconnected pores are connected to each other by pore throats.

The pore throats have the average diameter of 25 to 45 micrometers, the sizes of the pore throats are distributed across the range of 5 to 60 micrometers, and the sizes of 50% or more of the pore throats are distributed across the range of 20 to 45 micrometers.

Optionally, the pore throats have the average diameter of 28 to 36 micrometers, the sizes of the pore throats are distributed across the range of 10 to 55 micrometers, and the sizes of 90% or more of the pore throats are distributed across the range of 20 to 45 micrometers.

Optionally, the pore throats have the average diameter of about 29 to 35 micrometers, the sizes of the pore throats are distributed across the range of 12 to 50 micrometers, and the sizes of more than 95% of the pore throats are distributed across the range of 20 to 45 micrometers.

Optionally, the sizes of the pore throats are distributed across the range of 20 to 45 micrometers.

Optionally, the framework is a glass clad fiber skeleton structure, including skeleton elements and connection elements that connect the skeleton elements, where the skeleton elements have the average diameter of 20 to 45 micrometers and the average length of 60 to 100 micrometers.

Optionally, the multi-directional interconnected pores have a pore diameter of 70 to 100 micrometers.

Optionally, the porous glass material has the porosity of 65% to 80%, optionally, 70% to 74%.

Optionally, the liquid guiding rate of the porous glass material at room temperature is 0.09 mm/s or greater for a vaporization substrate having the viscosity of 230 cP; optionally, the liquid guiding rate at room temperature is 0.10 mm/s or greater; and further optionally, the liquid guiding rate at room temperature is 0.12 mm/s or greater.

Also provided in this application is a vaporization core including a substrate of the porous glass material above. A heating unit is disposed on the substrate.

Optionally, the temperature field deviation of the vaporization core is less than 10°C during vaporization.

Also provided in this application is an electronic vaporizer including the vaporization core above.

The porous glass substrate may be in a shape of a flat cuboid or a cylinder, or may be in a shape of an irregular structure. A vaporization surface has the thickness of 0.5 to 4 mm, optionally, 1.5 to 2.5 mm. Typically, and not by limitation, as to the external dimension, the porous glass substrate has the length of 9.0 mm, the width of 4.0 mm, and the thickness of 1.6 ± 0. 1 (mm), 2.0 ± 0. 2 (mm), or 2.4 ± 0. 1 (mm). Alternatively, as to the external dimension, the porous glass substrate has the length of 7.4 mm, the width of 4.0 mm, and the thickness of 1.6 ± 0. 1 (mm), 2.0 ± 0. 2 (mm), or 2.4 ± 0. 1 (mm).

A method for preparing the porous glass material generally includes the following steps: mixing glass powder, a fiber component, and pore-forming agent to prepare a green compact, performing binder removal, and sintering, and the like.

Optionally, the fiber component has the diameter of 3 to 30 µm and the length of 20 to 500 µm.

Optionally, the fiber component has the diameter of 10 to 25 micrometers and the length of 20 to 150 µm.

Optionally, the fiber component has the length-to-diameter ratio of 1 to 10. Optionally, a fiber with the length of 50-150 µm has the length-to-diameter ratio of 2 to 5.

Additionally or alternatively, as to the fiber component, the proportion of fibers with the length of 50 µm or greater is 25%; optionally, the proportion is 40% or greater; and further optionally, the proportion ranges from 40% to 100%.

Based on the total mass of the glass powder and the fiber component, the glass powder account for 40% to 62%, and the fiber component accounts for 38% to 60%.

Additionally or alternatively, the dosage of the pore-forming agent ranges from 0.3 to 2.5 times the total mass of the glass powder and the fiber component.

The green compact may be prepared using any one of the following processes: tape casting, injection molding, dry pressing, or gel casting.

The foregoing processes for preparing the green compact are well known in the art, and a corresponding processing additive may be used based on the different selected processes. Typically, and not by limitation, general steps of a gel casting process are as follows: first mixing materials uniformly, then incorporating the mixed materials to a sol solution, and stirring into a paste at a specified temperature. Subsequently, the paste is cast into a correspondingly shaped mold, and cooled to form the green compact.

Additionally or alternatively, the binder removal is performed at the temperature of 200°C to 800°C for 5 to 50 hours; and optionally, at the temperature of 200°C to 350°C.

Additionally or alternatively, the sintering is performed at the temperature of 900°C to 1250°C or 1180°C to 1320°C for 10 to 180 min.

Optionally, the method for preparing the porous glass satisfies at least one of the following (1) to (5).
(1) The softening temperature of the glass powder ranges from 600 to 1200°C; and the selected fiber material can play a role as a framework provided that its softening point is the sintering temperature or greater during preparing.
(2) The particle size of the glass powder is 10 µm or less, and optionally, the particle size is 3000 mesh or finer.
(3) The fiber component includes at least one of silicon carbide fibers, silicon nitride fibers, aluminum silicate fibers, silica fibers, mullite fibers, alumina fibers, hydroxyapatite fibers, and zirconia fibers.
(4) The pore-forming agent include one or a mixture of materials that are decomposable, volatile, or combustible at elevated temperatures, such as carbon powder, polystyrene, polymethyl methacrylate, polylactic acid, polyvinyl alcohol, polyethylene terephthalate (PET), engineering plastics, starch, cellulose, wood flour, graphite powder, and the like.
(5) The particle size of the pore-forming agent ranges from 10 to 300 µm. Optionally, the average particle size of the pore-forming agent is 80 micrometers. Superior interconnectivity in the porous glass material can be achieved by adjusting the incorporation ratio of pore-forming agent with varying diameters.

To obtain the porous glass material with such special pore structure, the glass raw material and fiber material are preprocessed as follows.
1. The glass powder raw material shall have a particle size less than 10 micrometers, and optionally, glass powder with the particle size of 3000 mesh or finer is used. To obtain glass powder with uniform particle size distribution, commercially available glass powder may be subjected to high-energy planetary ball milling at 200 to 500 r/min for 3 to 5 hours by using ethanol as the solvent, followed by drying and sieving prior to use.
2. The fiber may be high-temperature resistant fiber, such as mullite fiber, zirconia fiber, or alumina fiber. In this application, mullite fiber with the diameter of 10 to 25 micrometers, the length of less than 150 micrometers and the length-to-diameter ratio of 1 to 10 may be preferred. Generally, commercially available short-cut fiber of 2 to 5 mm are initially crushed using a crusher to achieve the particle size of 0.5 mm or less. The pre-crushed fibers are subject to high-energy planetary ball milling in ethanol solvent with stearic acid as milling aid for 2 to 8 hours at 100 to 400 r/min, optionally, at 300 r/min. Then, the milled fibers are rinsed with ethanol, dried and sieved through a 100-mesh screen to obtain target fiber. Optionally, the ball milling is performed for 6 hours to obtain target fiber. The target fiber is preferably fiber between 300 mesh and 100 mesh obtained after 6-hour ball milling and sieving.

To form a porous glass substrate with more uniform aperture distribution, spherical pore-forming agent is selected, either 50 micrometers or 80 micrometers, or mixtures thereof in a specified ratio.

Specifically, the porous glass in this application is prepared via gel casting method, including the following steps.

The glass powder, fibers, and pore-forming agent are proportionally mixed in a certain ratio, followed by uniformly mixing for 2 hours using a three-dimensional blender. The mixture is then incorporated into an 80°C agarose sol solution under gentle agitation until a uniform paste is formed. This paste is subsequently cast into a corresponding mold, and cooled to obtain a green compact.

The green compact is conditioned at 60°C for 1 to 5 hours, then heated to 200°C for 200 minutes, and then heated to 500°C at 0.5°C/min, where dwell times of 2 hours are respectively set at 240°C, 300°C and 350°C, then heated to 1150°C to 1320°C at 5°C/min, dwells for 15 to 30 minutes, and is naturally cooled to room temperature, to obtain a porous glass material. Generally, the binder removal process is better determined based on the thermogravimetric curve of the pore-forming agent.

Alternatively, the strength and sintering performance of the porous glass materials can be enhanced by incorporating glass powder binders and/or ceramic fiber materials. Generally, incorporation or addition of ceramic powders and non-effective ceramic fibers will decrease the porosity of the porous glass substrate. Generally, hollow glass microspheres, glass powder, and/or ceramic fibers are uniformly mixed in a three-dimensional blender. The mixture is then incorporated into an 80°C agarose sol solution under gentle agitation until a uniform paste is formed. This paste is subsequently cast into a corresponding mold, and cooled to obtain a green compact. The green compact is conditioned at 60°C for 1 to 5 hours, then heated to 200°C for 200 minutes, and then heated to 500°C at 0.5°C/min, where dwell times of 1 hours are respectively set at 240°C and 350°C, then heated to 1000°C to 1150°C at 5°C/min, dwells for 30 minutes, and is naturally cooled to room temperature, to obtain the porous glass material.

Typically, and not by limitation, the vaporization core provided in this application includes a substrate of the porous glass material, and a heating unit is disposed on the substrate, the heating unit is a heating wire, a heating mesh, or a heating film. The heating wire or heating mesh needs to be embedded during the green compact molding, and then sintered together with the molded green compact to obtain a porous glass vaporization core. When using the heating film, a thick-film resistive heating film can be printed through screen printing on the porous glass substrate, or the thin-film resistive heating film can be sprayed or magnetron sputtered onto the porous glass substrate, with the heating film pattern designed accordingly. After sintering, the porous glass vaporization core is formed.

Typically, and not by limitation, the thick-film resistive heating film is prepared through screen printing, and the thick film mainly includes nickel-based alloys, iron-based alloys, silver alloys, titanium alloys, aluminum alloys, stainless steel, etc., including elements such as Fe, Cr, Ni, Ti, Pa, Pt, Al, Mo, Si, and Ag. The thick film has the protruding thickness of 11 to 100 µm, the infiltration depth of 10 to 100 µm, the line width of 250 to 450 µm, and the line spacing of 300 µm to 900 µm. The thick film employs a pattern such as S, M, Ω, etc.. In addition, the heating film is sintered at 700°C to 1200°C for 0.5 to 3 hours.

Typically, and not by limitation, when the thin-film resistive heating film is prepared by spraying or magnetron sputtering, the thin film mainly includes nickel-based alloys, silver alloys, titanium alloys, aluminum alloys, stainless steel, etc., including elements such as Fe, Cr, Ni, Ti, Pa, Pt, Al, Mo, Si, and Ag. The thin film has the protruding thickness of 0.5 to 5 µm.

For example, the vaporization core is prepared by printing a heating film on the porous glass material followed by sintering, and the heating film is a porous heating film. The porous heating film includes a portion above the surface of the porous glass substrate and a portion infiltrated into the porous glass substrate. The portion above the surface of the porous glass substrate has a porous structure with the aperture of 5 to 30 micrometers, where pores in the surface portion are connected to each other and to substrate pores, and has the height of 30 to 100 micrometers, optionally about 80 micrometers. The portion infiltrated into the porous glass substrate is a heating film, with the maximum infiltrated depth of about 70 micrometers, and embedded within pore channels of the porous substrate. This structural integration ensures robust adhesion between the entire porous heating film and the porous glass substrate, with the heating film demonstrating the resistance value ranging from 0.8 to 1.2 Ω.

The technical solution of this application has the following advantages.

A porous glass material having uniform pore channels provided in this application provides includes a framework and multi-directional interconnected pores, where the multi-directional interconnected pores are connected to each other by pore throats. The pore throats have the average diameter of 25 to 45 micrometers, the sizes of the pore throats are distributed across the range of 5 to 60 micrometers and the sizes of 50% or more of the pore throats are distributed across the range of 20 to 45 micrometers. In this application, with sizing of the pore throats, the dimensions of interconnected channels between pores are uniform, avoiding uneven liquid guiding rate and localized overheating during use of the vaporization core. This avoids localized coking and carbon deposition, ensuring stable vapor generation with negligible performance degradation during vaping. Specifically, the prepared vaporization core is evaluated for its temperature distribution during vaporization using an infrared thermal imager. It demonstrates a uniform temperature field across the vaporization process, with no localized hot spots observed. The vaporization temperature remains stably distributed within the range of 235 to 245°C. Compared to a commercially available ceramic heating element, a porous glass substrate exhibits significantly reduced carbon deposition under the same conditions in vaping applications. In addition, the liquid guiding rate is significantly increased, with a maximum increase of 33% or greater compared with the commercially available porous ceramic heating element.

The porous glass material having uniform pore channels provided in this application achieves enhanced overall homogeneity through optimized design of parameters such as pore throats, framework, multi-directional interconnected pores, porosity, and liquid guiding rate. This optimization results in significantly improved and highly consistent e-liquid-guiding performance across the porous glass material, while simultaneously enhancing temperature field uniformity during vaporization. These advancements effectively reduce localized coking and carbon deposition, thereby substantially improving vaporization efficiency.

### BRIEF DESCRIPTION OF THE DRAWINGS

In order to illustrate the technical solutions in the specific embodiments of this application or in the prior art more clearly, the following will briefly introduce the drawings required in the description of the specific embodiments or the prior art. It is obvious that the drawings in the following description are some embodiments of this application. For those of ordinary skill in the art, other drawings can also be obtained according to these drawings without creative efforts.
FIG. 1 is a size distribution diagram of pore throats of a porous glass material according to Examples 1 to 3 and Comparative Example 1 of this application;
FIG. 2 is a macrostructure diagram (left) and microstructure diagram (right) of a vaporization core according to this application;
FIG. 3 is a temperature field distribution and a temperature distribution diagram of Example 1 during vaporization in a test example;
FIG. 4 is a temperature field distribution and a temperature distribution diagram of Comparative Example 1 during vaporization in a test example;
FIG. 5 is a diagram of carbon deposition comparison between a ceramic heating element of Example 1 of this application and a commercially available ceramic heating element; and
FIG. 6 is a microstructure diagram of a porous material according to Example 1 of this application.

### DETAILED DESCRIPTION

The following examples are provided to better understand this application. They are not limited to the best embodiments, and do not constitute a limitation to the content and the scope of protection of this application. Any product identical or similar to this application obtained by anyone under the inspiration of this application or by combining this application with the features of other prior art shall fall within the scope of protection of this application.

For those examples in which specific experimental steps or conditions are not specified, the operations or conditions of the conventional experimental steps described in the documents in the art can be carried out. For those reagents or instruments for which the manufacturers are not specified, they are all conventional reagent products that can be obtained through commercially available channels.

### Example 1

This example provides a porous glass material having uniform pore channels, and a specific preparing method therefor includes the following steps.

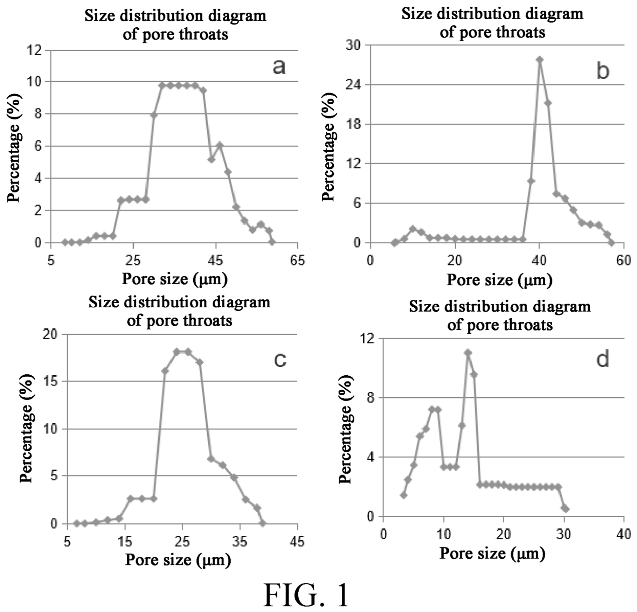

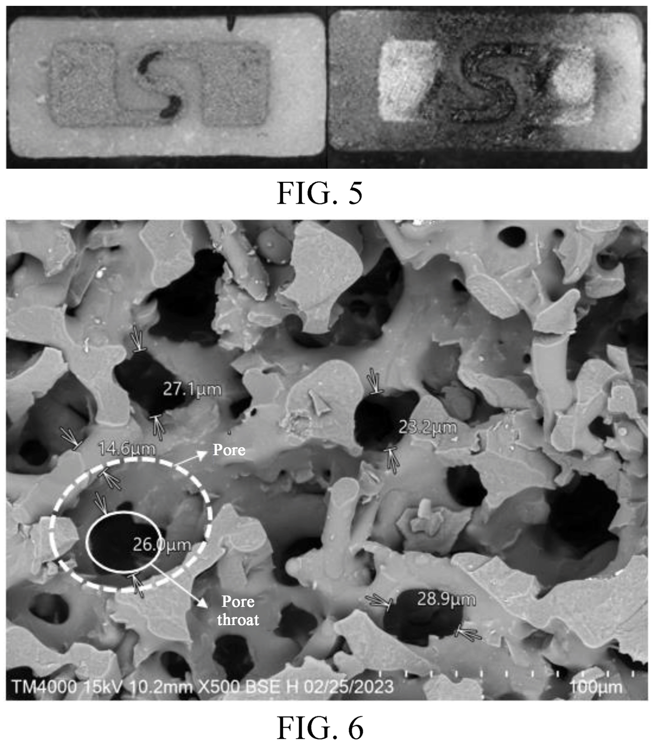

Using ethanol as the solvent, glass powder is subjected to planetary ball milling at 300 r/min for 3 hours. The milled material is then dried and sieved to obtain glass powder with the particle size of 3 to 5 micrometers. Crushed mullite short-cut fibers are ball-milled in a planetary mill for 6 hours at 300 r/min, using ethanol as the solvent and stearic acid as the milling aid. After ethanol washing and drying, the fibers are sieved through a 100-mesh screen to obtain fiber raw material. A homogeneous mixture is prepared by mixing 48 parts of glass powder, 52 parts of mullite fiber, and 100 parts of PMMA pore-forming agent (80 micrometers) in a three-dimensional blender for 2 hours. The mixture is then incorporated into 140 parts of an 80°C agarose sol solution (3.5%) (the same below"), followed by gentle stirring at 80°C until a uniform paste is formed. This paste is subsequently cast into a correspondingly shaped mold, cooled and removed to obtain a green compact. The green compact is conditioned at 60°C for 4 hours in an oven, then heated to 200°C for 200 minutes, and then heated to 500°C at 0.5°C/min, where dwell times of 2 hours are respectively set at 240°C and 350°C, then heated to 1180°C at 5°C/min, dwells for 30 minutes, and is naturally cooled to room temperature, to obtain the porous glass material. The porous glass material has the porosity of 71.6% and the average pore throat size of 34 micrometers. The sizes of the pore throats are distributed across the range of 16 to 55 micrometers, following an approximately normal distribution, and the sizes of 50% or more of the pore throats are distributed across the range of 25 to 42 micrometers. The size distribution of the pore throats is shown in FIG. 1a. The framework has the average diameter of 25 micrometers and the average length of 100 micrometers, and the multi-directional interconnected pores have the diameter of 75 micrometers. FIG. 6 is a microstructure diagram of a porous glass material.

A piece of porous glass material (9 mm × 4 mm × 2.5 mm) is subjected to e-liquid guiding tests at room temperature using e-liquid with a viscosity of 230 cP. When positioned vertically (9 mm height), the material achieves a 9 mm liquid rise in approximately 75 seconds, corresponding to a guiding rate of 0.12 mm/s. Under identical conditions, a commercially available porous ceramic substrate requires 100 seconds for the same 9 mm liquid rise, yielding a guiding rate of 0.09 mm/s. Compared to the commercially available ceramic substrate, the porous glass material demonstrates an increase of 33% or greater in guiding rate.

### Example 2

This example provides a porous glass material having uniform pore channels, and a specific preparing method therefor includes the following steps.

Using ethanol as the solvent, glass powder is subjected to planetary ball milling at 300 r/min for 3 hours. The milled material is then dried and sieved to obtain glass powder with the particle size of 3 to 5 micrometers. Crushed zirconia short-cut fibers are ball-milled in a planetary mill for 6 hours at 300 r/min, using ethanol as the solvent and stearic acid as the milling aid. After ethanol washing and drying, the fibers are sieved through a 100-mesh screen to obtain fiber raw material. A homogeneous mixture is prepared by mixing 40 parts of glass powder, 60 parts of fiber, and 200 parts of PMMA pore-forming agent (80 micrometers) in a three-dimensional blender for 2 hours. The mixture is then incorporated into 130 parts of an 80°C agarose sol solution, followed by gentle stirring at 80°C until a uniform paste is formed. This paste is subsequently cast into a correspondingly shaped mold, cooled and removed to obtain a green compact. The green compact is conditioned at 60°C for 2 hours in an oven, then heated to 200°C for 200 minutes, and then heated to 500°C at 0.5°C/min, where dwell times of 2 hours are respectively set at 240°C and 350°C, then heated to 1250°C at 5°C/min, dwells for 30 minutes, and is naturally cooled to room temperature, to obtain the porous glass material. The porous glass material has the porosity of 74.2% and the average pore throat size of 40 micrometers. The sizes of the pore throats are distributed across the range of 7 to 56 micrometers and the sizes of 50% or more of the pore throats are distributed across the range of 38 to 45 micrometers The size distribution of the pore throats is shown in FIG. 1b. The framework has the average diameter of 20 micrometers and the average length of 100 micrometers, and the multi-directional interconnected pores have the diameter of 80 micrometers.

A porous glass substrate (9 mm × 4 mm × 2.5 mm) is subjected to e-liquid guiding tests at room temperature using e-liquid with a viscosity of 230 cP. When positioned vertically (9 mm height), the substrate achieves a 9 mm liquid rise in approximately 85 seconds, corresponding to a guiding rate of 0.11 mm/s.

### Example 3

This example provides a porous glass material having uniform pore channels, and a specific preparing method therefor includes the following steps.

Using ethanol as the solvent, glass powder is subjected to planetary ball milling at 300 r/min for 3 hours. The milled material is then dried and sieved to obtain glass powder with the particle size of 3 to 5 micrometers. Crushed mullite short-cut fibers are ball-milled in a planetary mill for 6 hours at 300 r/min, using ethanol as the solvent and stearic acid as the milling aid. After ethanol washing and drying, the fibers are sieved through a 100-mesh screen to obtain fiber raw material. A homogeneous mixture is prepared by mixing 62 parts of glass powder, 38 parts of fiber, 50 parts of PMMA pore-forming agent (50 micrometers) and 190 parts of PMMA pore-forming agent (80 micrometers) in a three-dimensional blender for 2 hours. The mixture is then incorporated into 120 parts of an 80°C agarose sol solution, followed by gentle stirring at 80°C until a uniform paste is formed. This paste is subsequently cast into a correspondingly shaped mold, cooled and removed to obtain a green compact. The green compact is conditioned at 60°C for 1 hour in an oven, then heated to 200°C for 200 minutes, and then heated to 500°C at 0.5°C/min, where dwell times of 2 hours are respectively set at 240°C and 350°C, then heated to 1220°C at 5°C/min, dwells for 30 minutes, and is naturally cooled to room temperature, to obtain the porous glass material. The porous glass material has the porosity of 67.7% and the average pore throat size of 23 micrometers. The sizes of the pore throats are distributed across the range of 12 to 39 micrometers, following an approximately normal distribution pattern, and the sizes of 50% or more of the pore throats are distributed across the range of 22 to 28 micrometers. The size distribution of the pore throats is shown in FIG. 1c. The framework has the average diameter of 25 micrometers and the average length of 95 micrometers, and the multi-directional interconnected pores have the diameter of 60 micrometers.

A porous glass substrate (9 mm × 4 mm × 2.5 mm) is subjected to e-liquid guiding tests at room temperature using e-liquid with a viscosity of 230 cP. When positioned vertically (9 mm height), the substrate achieves a 9 mm liquid rise in approximately 80 seconds, corresponding to a guiding rate of 0.11 mm/s.

### Comparative Example 1

This comparative example provides a porous glass material, and a preparing method therefor includes the following steps.

Using ethanol as the solvent, glass powder is subjected to planetary ball milling at 300 r/min for 3 hours. The milled material is then dried and sieved to obtain glass powder with the particle size of 3 to 5 micrometers. Crushed mullite short-cut fibers are ball-milled in a planetary mill for 6 hours at 300 r/min, using ethanol as the solvent and stearic acid as the milling aid. After ethanol washing and drying, the fibers are sieved through a 100-mesh screen to obtain fiber raw material. A homogeneous mixture is prepared by mixing 70 parts of glass powder, 30 parts of fiber, and 200 parts of PMMA pore-forming agent (80 micrometers) in a three-dimensional blender for 2 hours. The mixture is then incorporated into 120 parts of an 80°C agarose sol solution, followed by gentle stirring at 80°C until a uniform paste is formed. This paste is subsequently cast into a correspondingly shaped mold, cooled and removed to obtain a green compact. The green compact is conditioned at 60°C for 1 hour in an oven, then heated to 200°C for 200 minutes, and then heated to 500°C at 0.5°C/min, where dwell times of 2 hours are respectively set at 240°C and 350°C, then heated to 1180°C at 5°C/min,
dwells for 30 minutes, and is naturally cooled to room temperature, to obtain the porous glass material. The porous glass material has the porosity of 47.7% and the average pore throat size of 15.2 micrometers. The sizes of the pore throats are distributed across the range of 3 to 30 micrometers, and the sizes of 50% or more of the pore throats are distributed across the range of 7 to 15 micrometers. The size distribution of the pore throats is shown in FIG. 1d. The framework has the average diameter of 35 micrometers and the average length of 55 micrometers, and the multi-directional interconnected pores have the diameter of 60 micrometers.

A porous glass substrate (9 mm × 4 mm × 2.5 mm) is subjected to e-liquid guiding tests at room temperature using e-liquid with a viscosity of 230 cP. When positioned vertically (9 mm height), the substrate achieves a 9 mm liquid rise in approximately 96 seconds, corresponding to a guiding rate of 0.094 mm/s.

### Test Example

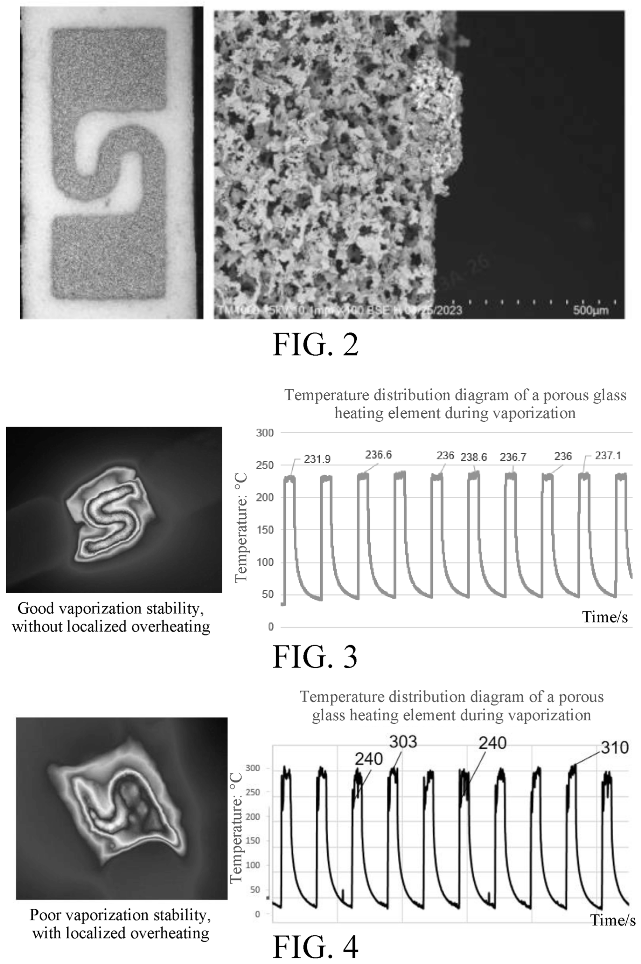

During fabricating a vaporization core using porous glass materials prepared in the Examples and Comparative Example, a porous iron-based heating film slurry (primarily composed of metallic Fe with minor additions of Ni, Cr, Mn, Mo, and W elements) is employed, which is screen-printed and sintered to form a porous heating film. The resulting film exhibits the aperture of 5 to 30 micrometers and pores are connected to each other and to substrate pores. The heating film has the protrusion height of about 80 micrometers above the substrate, the infiltration depth of about 70 micrometers into the substrate, the pattern shown in FIG. 2, the line width of 330 µm, and the line spacing of 650 µm. The distance between a line and the edge of the substrate is about 800 micrometers. The heating film is sintered at 980°C for 30 min, and the porous glass vaporization core is formed. The porous glass vaporization core is evaluated for its temperature states during vaporization using an infrared thermal imager under intermittent pulsing conditions (7.5 W power board, 3s activation/27s rest cycles). Fruit-flavored e-liquid is employed to assess the vaporization capability. It demonstrates a uniform temperature field across the vaporization process, with no localized hot spots observed. The vaporization temperature in Example 1 remains stably distributed within the range of 235°C to 245°C, as shown in FIG. 3. The vaporization temperature during vaporization in Comparative Example 1 is unstably distributed within the range of 240°C to 310°C, as shown in FIG. 4. The test results for Examples 2 to 3 demonstrate substantially equivalent to those of Example1, and are not presented one by one.

Puff testing is conducted on porous glass vaporization cores prepared from Examples 1 to 3 and Comparative Example 1 using a 7.5 W battery with fruit-flavored e-liquid, under a 3s puff/27s rest simulation cycle. Compared to a commercially available ceramic heating element (Feelm technology, Shenzhen Smoore Technology Co., Ltd.), the porous glass vaporization core of Example 1 exhibites superior carbon resistance. As shown in FIG. 5, after 400 puff cycles, the porous glass vaporization core (left) demonstrates statistically significant superiority in carbon resistance over the ceramic heating element (right). In contrast, the commercially available ceramic heating element exhibits severe carbon deposition after 400 puff cycles. The carbon deposition levels in Examples 2 and 3 demonstrate substantially equivalent to that of Example 1, while the carbon deposition level of Comparative Example 1 demonstrates substantially equivalent to that of commercially available ceramic heating element. These carbon deposition levels are not presented one by one in figures.

Obviously, the above examples were merely illustrations for clear description and not limitations on the embodiments. For those of ordinary skill in the art, other different forms of changes or variations could be made on the basis of the above description. All embodiments need not and cannot be exhaustive herein. However, the obvious changes or variations derived therefrom still fall within the scope of protection of this application.

## Claims

1. A porous glass material having uniform pore channels, comprising a framework and multi-directional interconnected pores, wherein the multi-directional interconnected pores are connected to each other by pore throats, wherein:
the pore throats have the average diameter of 25 to 45 micrometers, the sizes of the pore throats are distributed across the range of 5 to 60 micrometers, and the sizes of more than 50% of the pore throats are distributed across the range of 20 to 45 micrometers.

2. The porous glass material having uniform pore channels of claim 1, wherein the pore throats have the average diameter of 28 to 36 micrometers, the sizes of the pore throats are distributed across the range of 10 to 55 micrometers and the sizes of more than 90% of the pore throats are distributed across the range of 20 to 45 micrometers.

3. The porous glass material having uniform pore channels of claim 2, wherein the pore throats have the average diameter of about 29 to 35 micrometers, and the sizes of the pore throats are distributed across the range of 12 to 50 micrometers, and the sizes of more than 95% of the pore throats are distributed across the range of 20 to 45 micrometers.

4. The porous glass material having uniform pore channels of claim 3, wherein the sizes of the pore throats are distributed across the range of 20 to 45 micrometers.

5. The porous glass material having uniform pore channels of any one of claims 1 to 4, wherein the framework is a glass clad fiber skeleton structure, comprising skeleton elements and connection elements that connect the skeleton element, wherein the skeleton elements have the average diameter of 20 to 45 micrometers and the average length of 60 to 100 micrometers.

6. The porous glass material having uniform pore channels of claim 5, wherein the multi-directional interconnected pore has the pore diameter of 70 to 100 micrometers.

7. The porous glass material having uniform pore channels of any one of claims 1 to 4, wherein the porous glass material has the porosity of 65% to 80%.

8. The porous glass material having uniform pore channels of claim 7, wherein the porous glass material has the porosity of 70% to 74%.

9. The porous glass material having uniform pore channels of claim 7 or 8, wherein the liquid guiding rate of the porous glass material at room temperature is greater than 0.09 mm/s for a vaporization substrate having the viscosity of 230 cP.

10. The porous glass material having uniform pore channels of claim 9, wherein the liquid guiding rate at room temperature is greater than 0.10 mm/s.

11. The porous glass material having uniform pore channels of claim 9, wherein the liquid guiding rate at room temperature is greater than 0.12 mm/s.

12. A vaporization core, comprising a substrate of the porous glass material of any one of claims 1 to 11, wherein a heating unit is disposed on the substrate.

13. The vaporization core of claim 12, wherein the temperature field deviation is less than 10 °C during vaporization.

14. An electronic vaporizer, comprising the vaporization core of claim 12 or 13.
